# EUROPÄISCHE PATENTSCHRIFT

(11) **EP 1 554 153 B1**
(45) Veröffentlichungstag und Bekanntmachung des Hinweises auf die Patenterteilung: **12.04.2006**
(21) Anmeldenummer: 03753441.9
(22) Anmeldetag: 20.09.2003
(51) Int. Cl.: B60K 1/04, B60L 11/18

(54) **ANORDNUNG EINES STROMERZEUGUNGSSYSTEMS MIT EINER BRENNSTOFFZELLE IN EINEM ELEKTROFAHRZEUG**
LAYOUT OF AN ELECTRIC POWER PRODUCING SYSTEM PROVIDED WITH A FUEL CELL IN AN ELECTRIC VEHICLE
AGENCEMENT D'UN SYSTEME DE PRODUCTION DE COURANT, COMPORTANT UNE PILE A COMBUSTIBLE, DANS UN VEHICULE ELECTRIQUE

(30) Priorität: 24.10.2002 DE 10249437
(43) Veröffentlichungstag der Anmeldung: 20.07.2005
(73) Patentinhaber: DaimlerChrysler AG, 70567 Stuttgart (DE)
(72) Erfinder: BOTZELMANN, Herbert, 73630 Remshalden (DE)
(86) Internationale Anmeldenummer: PCT/EP2003/010513
(87) Internationale Veröffentlichungsnummer: WO 2004/037592

(56) Entgegenhaltungen:
- EP-B- 0 559 176
- WO-A-01/60655
- WO-A-02/067346
- DE-A- 4 427 322
- DE-A- 10 010 398
- DE-A- 10 026 268
- DE-C- 19 738 620
- FR-A- 2 816 889
- US-A- 5 390 754

## Beschreibung

Die Erfindung betrifft eine Anordnung eines Stromerzeugungssystems in einem Elektrofahrzeug, das wenigstens einen Elektrofahrmotor, eine Brennstoffzelle und Mittel zur Versorgung der Brennstoffzelle mit einem Brenngas und einem oxidierenden Gas enthält sowie eine Tragkonstruktion mit Längsträgern aufweist, und auf ein Verfahren zur Montage bzw. zum Einbau des Stromerzeugungssystems in das Elektrofahrzeug.

FR-A-2 816 889 offenbart ein Elektrofahrzeug, das eine Tragkonstruktion mit Längsträgern, einen Elektrofahrmotor und ein Stromerzeugungssystem mit einer Brennstoffzelle und Mittel zur Versorgung der Brennstoffzelle mit einem Brenngas und einem oxidierenden Gas enthält, wobei das Stromerzeugungssystem ein erstes Modul mit Geräten zur Aufbereitung und Dosierung der in die Brennstoffzelle einzuspeisenden Gase und ein zweites Modul mit der Brennstoffzelle enthält, das erste und das zweite Modul gemeinsam in einem Behälter befestigt sind, der in einen Hohlraum im Fahrzeug eingefügt und mit vier an den Behälterseitenwänden angebrachten Haltern an den Längsträgern des Fahrzeugs befestigt ist.

WO 01 60655 A offenbart ein Elektrofahrzeug mit einer Brennstoffzelle, die in einem Behälter befestigt ist, wobei ein Stromverteilungsmodul, das Verteilerstromkreise mit Sicherungen und ein Schaltelement zum Ein- und Ausschalten der Verteilerstromkreise aufweist, an einer Wand des Behälters befestigt und über Koppelelemente mit den elektrischen Ausgängen der Brennstoffzelle und mit Leitungen zu den elektrischen Verbrauchern im Elektrofahrzeug verbunden ist.

Ein Elektrofahrzeug mit einem Stromerzeugungssystem, das einen Elektrofahrmotor, eine Brennstoffzelle und Mittel zur Versorgung der Brennstoffzelle mit einem Brenngas und einem oxidierenden Gas enthält, ist bereits bekannt (DE 4 412 450 A1). Das Fahrzeug hat einen Rahmen, der zwei Längsträger und zwei Querträger umfasst. An den Längsträgern ist eine Vorderachse und eine Hinterachse angelenkt. Der an der Vorderachse angeordnete Elektrofahrmotor ist an einen Stromsteller angeschlossen, der von der Brennstoffzelle gespeist wird. Die Brennstoffzelle besteht aus einem Stapel von Einzelbrennstoffzellen. Zur Erzeugung des Brenngases sind ein Reformer, ein Brennstofftank und Zusatzaggregate wie Ionenaustauscher, Kondensatabscheider, Reformatkühler, Wärmeaustauscher, Wasserstoffzwischenspeicher und Brennstoffzellenkühler vorgesehen. Das oxidierende Gas wird mit einem Kompressor, dem ein Luftfilter vorgeschaltet ist, in die Brennstoffzelle eingespeist.

Der Erfindung liegt das Problem zugrunde, ein Stromerzeugungs- und -verteilungssystem für ein Elektrofahrzeug anzugeben, das vorgefertigte Teile enthält, mit denen das Fahrzeug schnell ausgerüstet werden kann, und ein Verfahren zum einfachen Einbau eines solchen Stromerzeugungssystems in ein Elektrofahrzeug bereitzustellen.

Das Problem wird durch ein Elektrofahrzeug mit den Merkmalen des Anspruchs 1 gelöst, wobei das Stromerzeugungssystem ein erstes Modul mit Geräten wenigstens zur Aufbereitung und Dosierung der in die Brennstoffzelle einzuspeisenden Gase und ein zweites Modul mit der Brennstoffzelle enthält, die mit dem ersten Modul durch mechanische Koppelmittel für die Leitung der der Brennstoffzelle zuzuführenden Gase, für die Ausleitung der Reaktionsgase aus der Brennstoffzelle und zur Leitung wenigstens eines Kühlmittels über die Brennstoffzelle sowie durch elektrische Koppelelemente für die Übertragung von Messwerten von Sensoren verbunden ist, das erste und das zweite Modul gemeinsam in einem Behälter befestigt sind, der von der Fahrzeugunterseite in einen Hohlraum im Fahrzeug einfügbar und mit wenigstens vier an den Behälterlängsseitenwänden angebrachten Haltern an den Längsträgern des Fahrzeugs befestigbar ist, und ein Stromverteilungsmodul, das zumindest Verteilerstromkreise mit Sicherungen und wenigstens ein Schaltelement zum Ein- und Ausschalten der Verteilerstromkreise aufweist, an einer Wand des Behälters befestigbar und über Koppelelemente mit den elektrischen Ausgängen der Brennstoffzelle und mit Leitungen zu den elektrischen Verbrauchern im Elektrofahrzeug verbindbar ist. Das erfindungsgemäße Stromerzeugungssystem weist demnach drei für sich herstellbare Module auf, von denen zwei innerhalb des Behälters montiert werden und das dritte mit einer Außenwand des Behälters verbunden wird. Die Herstellung des Moduls mit den Geräten für die Aufbereitung und Dosierung der Gase und des Moduls mit der Brennstoffzelle kann in einer speziell dafür eingerichteten Werkstatt erfolgen, in der auch die Verbindungen zwischen den beiden Modulen nach deren Anordnung in einer Lehre hergestellt werden. Danach wird diese Einheit aus den beiden miteinander verbundenen Modulen in den Behälter eingebaut. Die so gebildete Baugruppe eignet sich als Zulieferteil.

Vorzugsweise ist das erste Modul mit den Geräten zur Aufbereitung und Dosierung der in die Brennstoffzelle einzuspeisenden Gase - in Fahrtrichtung des Elektrofahrzeugs gesehen - vorne im Behälter angeordnet und mit dem Boden des Behälters verschraubt. Diese Anordnung ermöglicht eine schnelle und einfache Befestigung des Moduls, das im folgenden auch Gasaufbereitungsmodul genannt wird.

Bei einer weiteren bevorzugten Ausführungsform weist das zweite Modul mit der Brennstoffzelle ein Gehäuse auf, das die zahlreichen Einzelbrennstoffzellen mit elektrischen Verbindungen enthält und ist mit zwei Schrauben am hinteren Behälterboden sowie über je einen Halter links und rechts neben der Frontseite mit dem Behälter verbunden. Die Brennstoffzelle hat, insbesondere bei Auslegung für höhere elektrische Leistungen, ein höheres Gewicht und wird an vier Stellen am Behälter befestigt.
Insbesondere ist das Stromverteilungsmodul an einer Außenwand des Behälters befestigbar, die dem zweiten Modul benachbart ist und quer zu den Längsträgern verläuft. Das Stromverteilungsmodul hat im Vergleich zum Modul mit der Brennstoffzelle, im folgenden auch Brennstoffzellenmodul genannt, und zum Gasaufbereitungsmodul ein kleineres Gewicht und lässt sich daher leichter handhaben und am Behälter auch nach dessen Einbau in das Elektrofahrzeug befestigen.

Es ist weiterhin zweckmäßig, an den beiden Längsseiten des Behälters wenigstens je zwei Halter mit Führungsstiften vorzusehen, wobei die Führungsstifte in Löcher der Längsträger des Elektrofahrzeugs einschiebbar und die Halter mit Schrauben an den Längsträgern befestigbar sind. Diese Anordnung erlaubt eine einfache und schnelle Befestigung des Behälters mit den beiden Modulen am Fahrzeug.

Vorzugsweise sind die Halter derart ausgebildet, dass sie Bewegungsbeschränkungsmittel, die die Bewegung des Behälters relativ zu den Längsträgern beschränken und nur bei einem Aufprall ab einer bestimmten Aufprallstärke freigeben, und Energieaufnahmemittel zur kontrollierten Übertragung von kinetischer Energie vom Behälter auf die Längsträger unter zumindest teilweisem Energieverzehr aufweisen.

Bei einem Verfahren zur Montage bzw. zum Einbau eines Stromerzeugungssystems in ein Elektrofahrzeug, das wenigstens einen Elektrofahrmotor, eine Brennstoffzelle und Mittel zur Versorgung der Brennstoffzelle mit einem Brenngas und einem oxidierenden Gas enthält sowie eine Tragkonstruktion mit Längsträgern aufweist, wird das Problem erfindungsgemäß dadurch gelöst, dass ein erstes Modul mit Geräten wenigstens zur Aufbereitung und Dosierung der in die Brennstoffzelle einzuspeisenden Gase und ein zweites Modul mit der Brennstoffzelle hergestellt werden, dass das erste und das zweite Modul in einer Vorrichtung angeordnet und dann durch mechanische Koppelemente, die sich auf Leitungen für die der Brennstoffstoffzelle zuzuführenden und von dieser auszuleitenden Stoffe, auf Kühlmittelführung für die Brennstoffzelle und auf elektrische Koppelemente für die Sensorsignalübertragung zwischen den beiden Modulen beziehen, miteinander verbunden werden, dass danach die miteinander durch die Koppelelemente verbundenen Module in einem gemeinsamen Behälter befestigt werden, dass der Behälter mit den Modulen anschließend in ein Elektrofahrzeug von unten in einen in dem Fahrzeug vorgesehenen Hohlraum eingefügt und an den Längsträgern befestigt wird, dass sodann ein drittes Modul, das einen elektrischen Anschluß für die elektrischen Ausgänge der Brennstoffzelle und Stromverteilungskreise mit Sicherungen für den Anschluß elektrischer Verbraucher und wenigstens ein Schaltelement zum Ein- und Ausschalten der Stromverteilungskreise enthält, an einer Wand außen am Behälter befestigt wird, dass dann die elektrischen Verbindungen von dem dritten Modul zu der Brennstoffzelle und zu elektrischen Verbrauchern im Fahrzeug hergestellt werden und dass anschließend das erste Modul mit einer Quelle für das Brenngas und einem Kanal für die Luftzufuhr verbunden und mit Ein- und Ausgängen an wenigstens einen Kühlkreislauf im Elektrofahrzeug sowie an eine Ausgangsleitung für die Reaktionsprodukte der Brennstoffzelle angeschlossen wird. Mit dem erfindungsgemäßen Verfahren ist es möglich, wesentliche Komponenten des Stromversorgungssystems für sich entfernt vom Montageort des Fahrzeugs herzustellen und zu einer selbsttragenden Einheit zusammenzufügen, die zum Montageort des Fahrzeugs transportiert und in dieses schnell und einfach eingebaut werden kann. Dadurch reduziert sich insgesamt der Aufwand für die Montage des Fahrzeugs. Das Gasaufbereitungsmodul wird insbesondere mit zwei Schrauben - in Fahrtrichtung gesehen - vorne im Behälter befestigt. Das Brennstoffzellenmodul wird zweckmäßigerweise mit zwei Schrauben im hinteren Teil des Behälterbodens und mit zwei, je an einer Seite des Moduls angeordneten Haltern an den Längsseitenwänden des Behälters befestigt. Eine mechanische Schnittstelle zwischen dem Gasaufbereitungsmodul und dem Brennstoffzellenmodul beinhaltet jeweils Eingänge für Wasserstoffgas und Luft, Ein- und Ausgänge für wenigstens ein Kühlmedium und Ausgänge für die Reaktionsprodukte. Eine elektrische Schnittstelle ist für die Messwerte von Druck- und Temperatursensoren vorhanden. Die Koppelelemente der Schnittstellen werden nach der Anordnung und Verbindung des Gasaufbereitungsmoduls und des Brennstoffzellenmoduls in einer Lehre hergestellt. Danach werden die miteinander verbundenen Module im Behälter befestigt. Der Behälter mit den beiden Modulen wird anschließend in das Elektrofahrzeug eingebaut, indem er auf einem Hebezeug in einen Hohlraum im Fahrzeug eingeschoben und dann an vier an den Längsseiten des Behälters angebrachten Haltern mit den Längsträgern verschraubt wird. Anschließend wird ein Stromverteilungsmodul, das Anschlüsse für die elektrischen Ausgänge der Brennstoffzelle und Abzweigleitungen mit Sicherungen für den Anschluß elektrischer Verbraucher im Fahrzeug und einen Ein-, Ausschalter für die Abzweigleitungen enthält, an einer quer zu den Längsträgern verlaufenden Wand des Behälters befestigt. Danach werden die elektrischen Verbindungen hergestellt. Schließlich werden auch Verbindungen von einer Wasserstoffquelle zu einem Eingang am Gasaufbereitungsmodul, von einem Luftansaugkanal zum Gasaufbereitungsmodul und von diesem zu Ausgangsleitungen für die Reaktionsprodukte der Brennstoffzelle, zu Entlüftungsleitungen und zu einer Kühlmittelquelle hergestellt.

Die Erfindung wird im folgenden an Hand eines in einer Zeichnung dargestellten Ausführungsbeispiels näher beschrieben, aus dem sich weitere Einzelheiten, Merkmale und Vorteile ergeben.

Dabei zeigen:
- Fig. 1: ein aus Modulen zusammengesetztes und in einem Behälter angeordnetes Stromerzeugungssystem für ein Elektrofahrzeug in Seitenansicht,
- Fig. 2: ein aus Modulen zusammengesetztes und in einem Behälter angeordnetes Stromerzeugungssystem für ein Elektrofahrzeug in perspektivischer Ansicht von oben,
- Fig. 3: Längsträger eines Elektrofahrzeugs im Schnitt mit einem an den Längsträgern befestigten Behälter mit Modulen eines Stromerzeugungssystems schematisch in einer Ansicht von hinten.

Ein Stromerzeugungssystem 1 für ein Elektrofahrzeug weist ein erstes Modul 2 mit Geräten zur Aufbereitung und Dosierung der in eine Brennstoffzelle einzuspeisenden Gase auf. Die Gase sind z. B. Wasserstoff als Brenngas und Luft als oxidierendes Gas. Das Modul 2 weist einen Eingang 3 für Wasserstoff auf, der über ein Dosierventil der Brennstoffzelle zugeführt wird, die in einem zweiten Modul 4 angeordnet ist. Im Modul 2 sind nicht dargestellte Bauelemente wie ein Kompressor für die Luft, ein Luftfilter, Sensoren für Druck, Temperatur und Gasdurchflüsse und weitere Bauelemente für die Dosierung von Wasserstoff vorhanden. Das Modul 4 enthält die aus einem Stapel bzw. Stack einzelner Brennstoffzellenelemente bestehende Brennstoffzelle mit Anschlüssen für die Zufuhr von Wasserstoff, Luft, Kühlmittel und Ausgängen für die Reaktionsprodukte sowie elektrische Anschlüsse für die Abgabe von Strömen und Messwerten von Sensoren in der Brennstoffzelle.

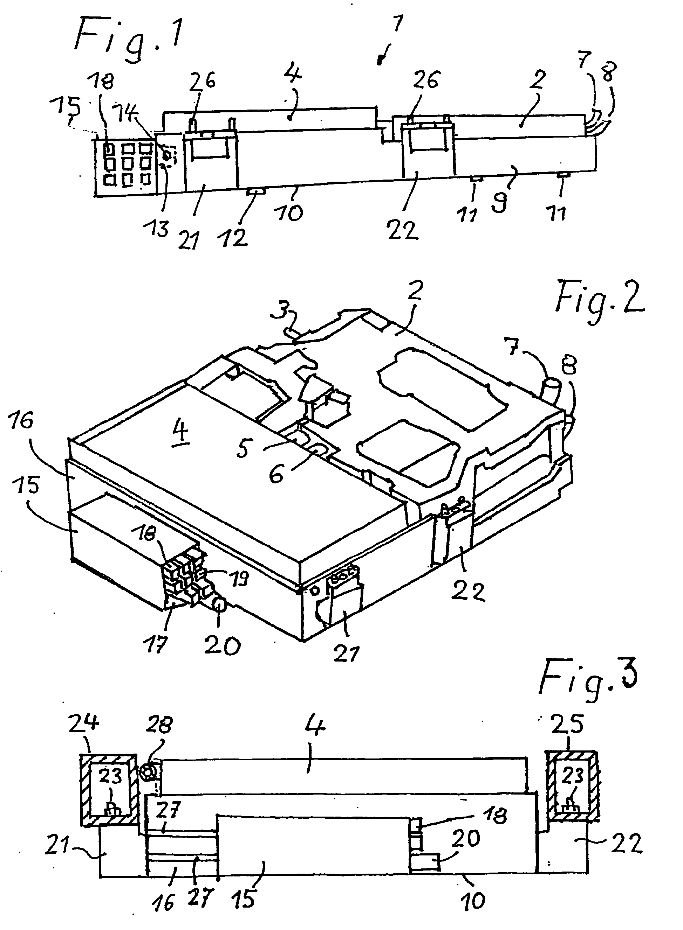

Für die Übertragung des Kühlmittels, z. B. Wasser, Wasserstoffgas, Luft und der Reaktionsprodukte der Brennstoffzelle sind zwischen den beiden Modulen 2,4 Schnittstellen für Koppelelemente vorgesehen, von denen in Fig. 2 zwei Koppelelemente 5, 6 dargestellt sind. Weitere, nicht dargestellte elektrische Schnittstellen Für die Übertragung von Messwerten aus in der Brennstoffzelle angeordneten Sensoren sind mit den entsprechenden Koppelelementen ebenfalls vorhanden. Am Modul 2 sind neben dem Eingang 3 Ein- und Ausgänge für das Kühlmittel, ein Eingang für Luft und wenigstens ein Ausgang für die Reaktionsprodukte der Brennstoffzelle vorhanden. Es sind in Fig. 2 zwei solcher Ein- und Ausgänge 7, 8 dargestellt.

Die beiden Module 2, 4 sind gemeinsam in einem Behälter 9 angeordnet, der trogförmig ausgebildet ist und mit seinem Boden einen Teil der Unterseite des jeweiligen Elektrofahrzeugs bildet. Das Modul 2 mit den Geräten für die Aufbereitung und Dosierung der Gase ist - in Längsrichtung des Fahrzeugs gesehen - vorne im Behälter 9 an dessen Boden 10 mittels Schrauben (11) befestigt. Das Modul 4 mit der Brennstoffzelle weist ein Gehäuse auf, das zahlreiche einzelne Brennstoffzellenelemente enthält, die nicht dargestellt sind. Mit zwei Schrauben (12) ist das Modul im hinteren Teil des Behälters 9 an dessen Boden 10 angeschraubt. Weiterhin ist das Modul 4 über zwei Halter 13, die sich seitlich links und rechts von der Frontfläche des Behälters 9 befinden, mittels Schrauben 14 an den Seitenwänden des Behälters 9 befestigt.

Ein drittes Modul 15, das auch als Stromverteilungsmodul bezeichnet ist, enthält Anschlüsse für die elektrischen Ausgänge der Brennstoffzelle und Abzweige mit Sicherungen für die elektrischen Verbraucher des von der Brennstoffzelle gespeisten Hochvoltnetzes von z. B. 200V-400V im Elektrofahrzeug und wenigstens einen Ein- Ausschalter für die Abzweige. Das Modul 15 ist - in Vorwärtsfahrtrichtung des Fahrzeugs gesehen - außen an der hinteren Wand 16 des Behälters 9 befestigt. Die Wand 16 ist dem Modul 4 benachbart. An einer Wand 17 des Moduls 15 befinden sich mehrere Steckverbinderelemente, von denen die Steckverbinderelemente 18, 19 und 20 bezeichnet sind. Die Steckverbinderelemente, z. B. 18, 19, 20 sind für die Anschlüsse von zu den Verbrauchern des Hochvoltnetzes führenden Kabeln bestimmt.

An den beiden Längsseiten des Behälters 9, d. h. den Seiten, die quer zu den Längsträgern des Fahrzeugs verlaufen, sind je zwei Halter 21, 22 befestigt, die für die Befestigung des Stromerzeugungssystems 1 am Fahrzeug bestimmt sind. Die Halter 21, 22 sind mittels Schrauben 23 an zwei Längsträgern 24, 25 einer Tragkonstruktion des Elektrofahrzeugs befestigt. Die Halter 21, 22 weisen Führungsstifte auf, die in korrespondierende, nicht näher dargestellte Löcher der Längsträger 24, 25 ragen und zur schnellen Ausrichtung des Behälters 9 auf den Ort der Befestigung an den Längsträgern bei der Montage vorgesehen sind. Die Halter 21, 22 sind mit Bewegungsbeschränkungsmitteln ausgestattet, die die Bewegung des Behälters 9 relativ zu den Längsträgern 24, 25 beschränken und nur bei einem Aufprall des Fahrzeugs ab einer bestimmten Aufprallstärke freigeben. Weiterhin weisen die Halter 21, 22 Energieaufnahmemittel zur kontrollierten Übertragung von kinetischer Energie vom Behälter 9 auf die Längsträger 24, 25 unter zumindest teilweisem Energieverzehr auf. Die Halter 21, 22 haben eine Art Fachwerk, das auf die vorstehend beschriebene Art Pendelbewegungen ermöglicht. In der DE 197 38 620 C1 ist ein Halter für einen Batterieträger eines Elektrofahrzeugs beschrieben, der die oben beschriebenen Bewegungen und den Energieverzehr im Crash-Fall ermöglicht.

Die Module 2 und 4 werden jeweils für sich hergestellt, wobei die nicht näher dargestellten Bauelemente in die Module eingesetzt und in diesen befestigt werden. Danach werden die notwendigen Verbindungen der Bauelemente untereinander in den Modulen 2 und 4 hergestellt. Anschließend werden beide Module 2, 4 in einer Vorrichtung, z. B. einer Lehre, fixiert und miteinander verbunden. Nach dem Einbau der Koppelelemente zwischen den beiden Modulen 2, 4 werden die Module in den Behälter 9 eingesetzt. Das Modul 2 wird vorne im Behälter 9 am Boden 10 angeschraubt. Das Modul 4 wird hinten im Behälter am Boden 20 und an den Seitenwänden des Behälters 9 angeschraubt. Der Behälter mit den Modulen 2, 4 stellt eine für sich transportierbare, stabile Einheit dar, die insbesondere als Zulieferteil für ein Elektrofahrzeug gefertigt werden kann. Zur Erzielung einer größeren Leistung ist eine Brennstoffzelle mit einem höheren Gewicht erforderlich. Der Behälter mit den Modulen 2, 4 wird auf ein Hebezeug gesetzt und von unten in einen dafür vorgesehenen Hohlraum des aufgebockten Elektrofahrzeugs gehoben, bis die Führungsstifte 26 in die dafür vorgesehenen Löcher der Längsträger 24, 25 eingreifen und die Halter 21, 22 an den Längsträgern 24, 25 anliegen. Danach werden die Halter 21, 22 an den Längsträgern 24, 25 angeschraubt. Anschließend wird das Modul 15 von unten in Führungsschienen an der Wand 16 bis zu einem nicht näher dargestellten Anschlag eingeschoben und an der Wand 16 mit Schrauben befestigt. Sodann werden die nicht dargestellten Kontakte an der Brennstoffzelle und dem Modul 15 miteinander verbunden. Nachdem das Modul 15 an der Wand 16 des im Elektrofahrzeug montierten Behälters 9 angebracht worden ist und die elektrischen Verbindungen zwischen der Brennstoffzelle und dem Modul 25 hergestellt sind, werden die Anschlussleitung 28 für die Wasserstoffzufuhr zum Eingang 3, die Leitungen zu den Ein- bzw. Ausgängen für Luft, die Reaktionsprodukte und Kühlwasser verlegt. Es kann ein Hochtemperatur- und ein Niedertemperaturkühlkreislauf im Fahrzeug angeordnet sein, die beide über den Behälter mit den Modulen 2, 4, geführt sind. Die Mittel zur Bereitstellung des Wasserstoffs, z. B. ein Wasserstofftank, sind bereits vor dem Einbau des Stromversorgungssystems 1 im Elektrofahrzeug angebracht worden.

## Patentansprüche

1. Elektrofahrzeug, das wenigstens einen Elektrofahrmotor, eine Brennstoffzelle und Mittel zur Versorgung der Brennstoffzelle mit einem Brenngas und einem oxidierenden Gas enthält sowie eine Tragkonstruktion mit Längsträgern aufweist, wobei das Stromerzeugungssystem (1) ein erstes Modul (2) mit Geräten wenigstens zur Aufbereitung und Dosierung der in die Brennstoffzelle einzuspeisenden Gase und ein zweites Modul (4) mit der Brennstoffzelle enthält, die mit dem ersten Modul (2) durch mechanische Koppelmittel für die Leitung der der Brennstoffzelle zuzuführenden Gase, für die Ausleitung der Reaktionsgase aus der Brennstoffzelle und zur Leitung wenigstens eines Kühlmittels über die Brennstoffzelle sowie durch elektrische Koppelelemente für die Übertragung von Messwerten von Sensoren verbunden ist, das erste und das zweite Modul (2,4) gemeinsam in einem Behälter (9) befestigt sind, der von der Fahrzeugunterseite in einen Hohlraum im Fahrzeug eingefügt und mit wenigstens vier an den Behälterseitenwänden angebrachten Haltern (21,22) an den Längsträgern (24,25) des Fahrzeugs befestigt ist, und ein Stromverteilungsmodul (15), das zumindest Verteilerstromkreise mit Sicherungen und wenigstens ein Schaltelement zum Ein- und Ausschalten der Verteilerstromkreise aufweist, an einer Wand des Behälters (9) befestigt und über Koppelelemente mit den elektrischen Ausgängen der Brennstoffzelle und mit Leitungen zu den elektrischen Verbrauchern im Elektrofahrzeug verbunden ist.

2. Elektrofahrzeug nach Anspruch 1,
**dadurch gekennzeichnet,**
**dass** das erste Modul mit den Geräten zur Aufbereitung und Dosierung der in die Brennstoffzelle einzuspeisenden Gase - in Fahrtrichtung des Elektrofahrzeugs gesehen - vorne im Behälter (9) angeordnet und mit dem Boden (10) des Behälters (9) verschraubt ist.

3. Elektrofahrzeug nach Anspruch 1 oder 2,
**dadurch gekennzeichnet,**
**dass** das zweite Modul (4) mit der Brennstoffzelle ein Gehäuse aufweist, das die zahlreichen Einzelbrennstoffzellen mit elektrischen Verbindungen enthält und mit zwei Schrauben (12) am hinteren Behälterboden sowie über je einen Halter (13) links und recht neben der Frontseite des Behälters (9) mit dem Behälter (9) verbunden ist.

4. Elektrofahrzeug nach zumindest einem der vorhergehenden Ansprüche,
**dadurch gekennzeichnet,**
**dass** das Stromverteilungsmodul (15) an einer Wand (16) außen am Behälter (9) befestigbar ist, die dem zweiten Modul (4) benachbart ist und quer zu den Längsträgern (24,25) verläuft.

5. Elektrofahrzeug nach zumindest einem der vorhergehenden Ansprüche,
**dadurch gekennzeichnet,**
**dass** an den beiden Längsseiten des Behälters (9) wenigstens je zwei Halter (21,22) mit Führungsstiften (26) vorgesehen sind, die in Löcher der Längsträger (24,25) des Elektrofahrzeugs einschiebbar sind, und dass die Halter (21, 22) mit Schrauben (23) an den Längsträgern (24,25) befestigbar sind.

6. Elektrofahrzeug nach zumindest einem der vorhergehenden Ansprüche,
**dadurch gekennzeichnet,**
**dass** die Halter (21,22) derart ausgebildet sind, dass sie Bewegungsbeschränkungsmittel, die die Bewegung des Behälters (9) relativ zu den Längsträgern (24, 25) beschränken und nur bei einem Aufprall ab einer bestimmten Aufprallstärke freigeben,und Energieaufnahmemittel zur kontrollierten Übertragung von kinetischer Energie vom Behälter auf die Längsträger (24,25) unter zumindest teilweisem Energieverzehr aufweisen.

7. Verfahren zur Montage bzw. zum Einbau eines Stromerzeugungssystems in einem Elektrofahrzeug, das wenigstens einen Elektrofahrmotor, eine Brennstoffzelle und Mittel zur Versorgung der Brennstoffzelle mit einem Brenngas und einem oxidierenden Gas enthält sowie eine Tragkonstruktion mit Längsträgern aufweist,
**dadurch gekennzeichnet,**
**dass** ein erstes Modul mit Geräten wenigstens zur Aufbereitung und Dosierung der in die Brennstoffzelle einzuspeisenden Gase und ein zweites Modul mit der Brennstoffzelle hergestellt werden, dass das erste und das zweite Modul in einer Vorrichtung angeordnet und dann durch mechanische Koppelelemente, die sich auf Leitungen für die der Brennstoffzelle zuzuführenden und von dieser auszuleitenden Stoffe, auf Kühlmittelführung für die Brennstoffzelle und auf elektrische Koppelemente für die Signalübertragung zwischen den beiden Modulen beziehen, miteinander verbunden werden, dass danach die miteinander durch die Koppelelemente verbundenen Module in einem gemeinsamen Behälter befestigt werden, dass der Behälter mit den Modulen anschließend in ein Elektrofahrzeug von unten in einen in diesem Fahrzeug vorgesehenen Hohlraum eingefügt und an den Längsträgern befestigt wird, dass sodann ein drittes Modul, das einen elektrischen Anschluß für die elektrischen Ausgänge der Brennstoffzelle und Stromverteilungskreise mit Sicherungen für den Anschluß elektrischer Verbraucher und wenigstens ein Schaltelement zum Ein- und Ausschalten der Stromverteilungskreise enthält, an einer Wand außen am Behälter befestigt wird, dass dann die elektrischen Verbindungen vom dritten Modul zu der Brennstoffzelle und zu Verbrauchern im Elektrofahrzeug hergestellt werden und dass anschließend das erste Modul (2) mit einer Quelle für das Brenngas und einem Kanal für die Luftzufuhr verbunden und mit Ein- und Ausgängen an wenigstens einen Kühlkreislauf im Elektrofahrzeug sowie an eine Ausgangsleitung für die Reaktionsprodukte der Brennstoffzelle angeschlossen wird.

8. Verfahren nach Anspruch 7 ,
**dadurch gekennzeichnet,**
**dass** das Gasaufbereitungsmodul mit zwei Schrauben (11) im Behälter (9) vorne - in Vorwärtsfahrtrichtung des Fahrzeugs gesehen - befestigt wird.

9. Verfahren nach Anspruch 7 oder 8,
**dadurch gekennzeichnet,**
**dass** das Brennstoffzellenmodul mit zwei Schrauben im hinteren Teil des Behälterbodens und mit zwei je an einer Seite des Moduls (9) befestigt wird.

10. Verfahren nach zumindest einem der Ansprüche 7-9,
**dadurch gekennzeichnet,**
**dass** das Stromverteilungsmodul (15) an der dem Modul (4) mit der Brennstoffzelle benachbarten, quer zu den Längsträgern (24,25) verlaufenden Wand des Behälters befestigt wird.

## Claims

1. Electrical vehicle which contains at least one electrical traction motor, a fuel cell and means for supplying the fuel cell with a combustion gas and an oxidizing gas, and has a load-bearing structure with longitudinal supports, in which the electrical power generating system (1) contains a first module (2) with appliances at least for preprocessing and metering of the gases to be fed into the fuel cell and a second module (4) with the fuel cell, which fuel cell is connected to the first module (2) by mechanical coupling means for carrying the gases to be supplied to the fuel cell, for dissipating the reaction gases from the fuel cell, and for carrying at least one coolant via the fuel cell and by electrical coupling elements for the transmission of measured values from sensors, in which the first module (2) and the second module (4) are jointly mounted in a container (9) which is inserted into a cavity in the vehicle from underneath the vehicle, and is attached to the longitudinal supports (24, 25) in the vehicle by means of at least four holders (21, 22) which are fitted to the container side walls, and in which an electrical power distribution module (15), which at least has distribution circuits with fuses and at least one switching element for switching the distribution circuits on and off, is attached to a wall of the container (9) and is connected via coupling elements to the electrical outputs of the fuel cell and to cables to the electrical loads in the electrical vehicle.

2. Electrical vehicle according to Claim 1,
**characterized**
**in that** the first module together with the appliances for preprocessing and metering of the gases to be fed into the fuel cell is arranged at the front (seen in the direction of travel of the electrical vehicle) of the container (9), and is screwed to the bottom (10) of the container (9).

3. Electrical vehicle according to Claim 1 or 2,
**characterized**
**in that** the second module (4) together with the fuel cell has a housing which contains the numerous individual fuel cells with electrical connections, and is connected to the container (9) by means of two screws (12) on the rear container bottom and via in each case one holder (13) on the left and right alongside the front face of the container (9).

4. Electrical vehicle according to at least one of the preceding claims,
**characterized**
**in that** the electrical power distribution module (15) can be attached to a wall (16) on the outside of the container (9), which wall (16) is adjacent to the second module (4) and runs transversely with respect to the longitudinal supports (24, 25).

5. Electrical vehicle according to at least one of the preceding claims,
**characterized**
**in that** at least two holders (21, 22) are provided on each of the two longitudinal faces of the container (9) and have guide pins (26) which can be pushed into holes in the longitudinal supports (24, 25) in the electrical vehicle, and in that the holders (21, 22) can be attached to the longitudinal supports (24, 25) by means of screws (23).

6. Electrical vehicle according to at least one of the preceding claims,
**characterized**
**in that** the holders (21, 22) are designed such that they have movement restriction means, which restrict the movement of the container (9) relative to the longitudinal supports (24, 25), and allow such movement only in the event of an impact beyond a specific impact strength, and have energy absorption means for controlled transmission of kinetic energy from the container to the longitudinal supports (24, 25), with energy being at least partially dissipated.

7. Method for mounting and/or for installation of an electrical power generating system in an electrical vehicle which contains at least one electrical traction motor, a fuel cell and means for supplying the fuel cell with a combustion gas and an oxidizing gas, and has a load-bearing structure with longitudinal supports,
**characterized**
**in that** a first module with appliances at least for preprocessing and metering of the gases to be fed into the fuel cell and a second module with the fuel cell are produced, in that the first and the second module are arranged in an apparatus and are then connected to one another by mechanical coupling elements which relate to lines for the substances to be supplied to the fuel cell and to be dissipated from it, to coolant routing for the fuel cell and to electrical coupling elements for signal transmission between the two modules, in that the modules which are connected to one another by means of the coupling elements are then mounted in a common container, in that the container is then inserted together with the modules into an electrical vehicle from underneath, into a cavity which is provided in this vehicle, and is attached to the longitudinal supports, in that a third module, which contains an electrical connection for the electrical outputs of the fuel cell and electrical power distribution circuits with fuses for the connection of electrical loads and at least one switching element for switching the electrical power distribution circuits on and off, is then attached to the container externally on a wall, in that the electrical connections are then made from the third module to the fuel cell and to loads in the electrical vehicle, and in that the first module (2) is then connected to a source for the combustion gas and to a channel for the air supply, and is connected by means of inputs and outputs to at least one cooling circuit in the electrical vehicle and to an output line for the reaction products from the fuel cell.

8. Method according to Claim 7,
**characterized**
**in that** the gas preprocessing module is mounted by means of two screws (11) in the container (9) at the front - seen in the forward direction of travel of the vehicle.

9. Method according to Claim 7 or 8,
**characterized**
**in that** the fuel cell module is mounted by means of two screws in the rear part of the container bottom, and by means of two, in each case on one face of the module (9).

10. Method according to at least one of Claims 7-9,
**characterized**
**in that** the electrical power distribution module (15) is attached to that wall of the container which is adjacent to the module (4) with the fuel cell and runs transversely with respect to the longitudinal supports (24, 25).

## Revendications

1. Véhicule électrique, qui comprend au moins un moteur de traction électrique, une pile à combustible et des moyens pour alimenter la pile à combustible en gaz combustible et en gaz oxydant, et qui présente une structure porteuse avec des longerons, sachant que le système de production de courant (1) comprend un premier module (2) pourvu d'appareils au moins pour préparer et doser les gaz à alimenter dans la pile à combustible et un deuxième module (4) pourvu de la pile à combustible, lequel est relié au premier module (2) par des moyens d'accouplement mécanique pour la conduction des gaz à apporter à la pile à combustible, pour l'évacuation des gaz de réaction hors de la pile à combustible et pour la conduction d'au moins un réfrigérant à travers la pile à combustible, ainsi que par des éléments d'accouplement électrique pour la transmission de valeurs de mesure de capteurs, sachant que le premier et le deuxième modules (2, 4) sont fixés conjointement dans un conteneur (9) qui est inséré par le dessous du véhicule dans une cavité du véhicule et qui est fixé aux longerons (24, 25) du véhicule par au moins quatre attaches (21, 22) installées sur les parois latérales du conteneur, et sachant qu'un module (15) de distribution de courant, qui présente au moins des circuits de distribution électrique dotés de fusibles et au moins un élément de commutation pour activer et désactiver les circuits de distribution électrique, est fixé sur une paroi du conteneur (9) et est relié via des éléments d'accouplement aux sorties électriques de la pile à combustible et à des lignes menant aux utilisateurs électriques du véhicule électrique.

2. Véhicule électrique selon la revendication 1, **caractérisé en ce que** le premier module pourvu des appareils pour préparer et doser les gaz à alimenter dans la pile à combustible est disposé - considéré dans la direction de marche du véhicule électrique - à l'avant dans le conteneur (9), et est assemblé par vissage au fond (10) du conteneur (9).

3. Véhicule électrique selon la revendication 1 ou 2, **caractérisé en ce que** le deuxième module (4) pourvu de la pile à combustible présente un boîtier qui contient les nombreuses cellules individuelles à combustible et leurs liaisons électriques, et qui est assemblé par deux vis (12) au fond arrière du conteneur et, par l'intermédiaire d'une attache respective (13) à gauche et à droite, au conteneur (9) sur les côtés de la face avant du conteneur (9).

4. Véhicule électrique selon au moins l'une quelconque des revendications précédentes, **caractérisé en ce que** le module (15) de distribution de courant peut être fixé extérieurement sur une paroi (16) du conteneur (9) qui est voisine du deuxième module (4) et qui s'étend transversalement aux longerons (24, 25).

5. Véhicule électrique selon au moins l'une quelconque des revendications précédentes, **caractérisé en ce qu'**au moins deux attaches (21, 22) sont prévues sur chacun des deux côtés longitudinaux du conteneur (9) et sont dotées de tenons de guidage (26) qui peuvent être enfilés dans des trous des longerons (24, 25) du véhicule électrique, et **en ce que** les attaches (21, 22) peuvent être fixées par des vis (23) sur les longerons (24, 25).

6. Véhicule électrique selon au moins l'une quelconque des revendications précédentes, **caractérisé en ce que** les attaches (21, 22) sont conçues de telle sorte qu'elles présentent des moyens de limitation de mouvement qui limitent le mouvement du conteneur (9) par rapport aux longerons (24, 25) et ne le libèrent qu'en cas de choc à partir d'une intensité de choc donnée, et des moyens d'absorption d'énergie pour la transmission contrôlée d'énergie cinétique du conteneur aux longerons (24, 25) avec dispersion au moins partielle d'énergie.

7. Procédé de montage ou d'intégration d'un système de production de courant dans un véhicule électrique qui comprend au moins un moteur de traction électrique, une pile à combustible et des moyens pour alimenter la pile à combustible en gaz combustible et en gaz oxydant, et qui présente une structure porteuse avec des longerons,
**caractérisé en ce qu'**on réalise un premier module pourvu d'appareils au moins pour préparer et doser les gaz à alimenter dans la pile à combustible et un deuxième module pourvu de la pile à combustible, **en ce que** le premier et le deuxième modules sont disposés dans un dispositif puis sont mutuellement reliés par des éléments d'accouplement mécanique qui concernent des conduites pour les substances à apporter à la pile à combustible et à évacuer de celle-ci, la conduction de réfrigérant pour la pile à combustible, et des éléments d'accouplement électrique pour la transmission de signaux entre les deux modules, **en ce que** les modules mutuellement reliés par les éléments d'accouplement sont ensuite fixés dans un conteneur commun, **en ce que** le conteneur pourvu des modules est ensuite inséré dans un véhicule électrique par le dessous dans une cavité prévue dans ce véhicule et est fixé aux longerons, **en ce qu'**un troisième module, qui contient un raccordement électrique pour les sorties électriques de la pile à combustible et des circuits de distribution électrique dotés de fusibles pour le raccordement d'utilisateurs électriques, et au moins un élément de commutation pour activer et désactiver les circuits de distribution électrique, est ensuite fixé extérieurement sur une paroi du conteneur, **en ce qu'**on réalise ensuite les liaisons électriques du troisième module avec la pile à combustible et avec des utilisateurs du véhicule électrique, et **en ce que** le premier module (2) est ensuite relié à une source de gaz combustible et à un canal d'alimentation en air, et est raccordé à des entrées et sorties sur au moins un circuit de refroidissement du véhicule électrique ainsi que sur une conduite de sortie pour les produits de réaction de la pile à combustible.

8. Procédé selon la revendication 7, **caractérisé en ce que** le module de préparation de gaz est fixé par deux vis (11) à l'avant - considéré dans la direction de marche avant du véhicule - dans le conteneur (9).

9. Procédé selon la revendication 7 ou 8, **caractérisé en ce que** le module de pile à combustible est fixé par deux vis dans la partie arrière du fond du conteneur et par deux sur chaque côté du module (9).

10. Procédé selon au moins l'une quelconque des revendications 7 à 9, **caractérisé en ce que** le module (15) de distribution de courant est fixé sur la paroi du conteneur qui est voisine du module (4) pourvu de la pile à combustible et qui s'étend transversalement aux longerons (24, 25).
